(19) Europäisches Patentamt
European Patent Office
Office européen des brevets

(11) **EP 2 038 151 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **07728945.2**

(22) Anmeldetag: **09.05.2007**

(51) Int Cl.:
**B60T 8/17** *(2006.01)* **B60T 8/172** *(2006.01)*
**B60T 8/1755** *(2006.01)*

(86) Internationale Anmeldenummer:
**PCT/EP2007/054493**

(87) Internationale Veröffentlichungsnummer:
**WO 2008/000547 (03.01.2008 Gazette 2008/01)**

(54) **VERFAHREN UND STEUERGERÄT ZUR ERKENNUNG EINES ANHÄNGERBETRIEBS BEI EINEM ZUGFAHRZEUG**

METHOD AND CONTROL DEVICE FOR IDENTIFYING A TRAILER OPERATION OF A TOWING VEHICLE

PROCÉDÉ ET APPAREIL DE COMMANDE POUR IDENTIFIER LE FONCTIONNEMENT D'UNE REMORQUE POUR UN VÉHICULE TRACTEUR

(84) Benannte Vertragsstaaten:
**DE FR**

(30) Priorität: **27.06.2006 DE 102006029367**

(43) Veröffentlichungstag der Anmeldung:
**25.03.2009 Patentblatt 2009/13**

(73) Patentinhaber: **Robert Bosch GmbH**
**70442 Stuttgart (DE)**

(72) Erfinder:
• **MERGENTHALER, Rolf-Hermann**
**71229 Leonberg (DE)**
• **NENNINGER, Gero**
**71732 Tamm (DE)**
• **SCHUMANN, Andreas**
**71732 Tamm (DE)**
• **BRANDER, Michael**
**74196 Neuenstadt (DE)**
• **BERDING, Lars**
**71711 Steinheim/murr (DE)**
• **FELLKE, Daniel**
**70182 Stuttgart (DE)**

(56) Entgegenhaltungen:
EP-A2- 0 765 787      WO-A-02/06101
WO-A-2004/041612      DE-A1- 10 032 230

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 038 151 B1

**Beschreibung**

Stand der Technik

Die Erfindung betrifft ein Verfahren zur Erkennung, ob sich ein Fahrzeug in einem Anhängerbetrieb befindet oder nicht gemäß dem Oberbegriff des Anspruchs 1 sowie ein Steuergerät zur Durchführung eines derartigen Verfahrens gemäß Anspruch 21.

Die DE 199 64 048 A1 beschreibt ein Fahrdynamikregelungssystem mit einer Anhängerschlingerlogik zum Stabilisieren eines Straßenfahrzeugs. Das Zugfahrzeug wird in Bezug auf Schlingerbewegungen überwacht, wobei bei Erkennen einer Schlingerbewegung das Fahrzeug automatisch abgebremst und/oder ein Giermoment eingeprägt wird, das der Schlingerbewegung entgegenwirkt.

Die bekannte Anhängerschlingerlogik wird in der Regel erst aktiviert, wenn erkannt wird, ob ein Anhänger an das Zugfahrzeug angehängt ist oder nicht. Stand der Technik sind Vorrichtungen zum Erkennen eines Anhängers, bei denen das Signal zur Erkennung eines Anhängerbetriebs einer Vorrichtung entnommen wird, welche eine direkte Verbindung des Anhängers mit dem Zugfahrzeug herstellt. Meist wird das Signal abgeleitet, indem die Belegung eines Bremslichtsteckers geprüft und in der Folge auf Vorhandensein eines Anhängers geschlossen wird.

Im Besonderen wird in der DE 197 44 066 A1 eine Vorrichtung zum Erkennen eines Anhängerbetriebes bei einem Kraftfahrzeug beschrieben, bei welchem abhängig von dem zum Anhänger angesteuerten Druck eine den Druckaufbau charakterisierende Größer ermittelt wird, auf deren Basis festgestellt wird, ob ein Anhänger angekoppelt ist oder nicht. Die in der DE 197 44 066 A1 beschriebene Vorrichtung setzt ein System mit einer Komponente zur Erfassung des zum Anhänger gesteuerten Drucks, in der Regel zumindest einen gebremsten Anhänger, voraus. Diese Voraussetzungen sind nicht immer erfüllt, mit der Folge, dass eine Erkennung für diese Fälle nicht erfolgen kann.

In einigen Fällen können die genannten Herangehensweisen jedoch zu Fehlbelegungen der die Präsenz des Anhängers repräsentierenden Größe und daher zu Fehleingriffen des Fahrdynamikregelungssystems bzw. zu einem suboptimalen Verhalten bezüglich der Fahrdynamik-, Antriebs- und Bremsschlupfregelung sowie der Logiken zur Anhängerstabilisierung führen. Folgende Fälle können beispielsweise zu Fehlbelegungen der die Präsenz des Anhängers repräsentierenden Größe führen:

Die die Präsenz des Anhängers anzeigende Vorrichtung ist im Zugfahrzeug nicht vorhanden oder wird nicht verwendet. Beispielsweise besteht in außereuropäischen Ländern teilweise keine Verpflichtung zur Verwendung eines Bremslichtsteckers im Anhängerbetrieb.

Die die Präsenz des Anhängers anzeigende Vorrichtung wird nicht durch einen Anhänger, sondern durch eine andere Vorrichtung, beispielsweise einen Fahrradträger, belegt. In der Folge erhält das Fahrdynamikregelungssystem die Information, dass das Fahrzeug mit Anhänger betrieben wird, obwohl kein Anhänger an das Zugfahrzeug angehängt ist.

Ein Verfahren zur Erkennung eines Anhängerbetriebs gemäß dem Oberbegriff des unabhängigen Anspruchs 1 ist aus der EP 0 765 787 A2 bekannt

Offenbarung der Erfindung

Technische Aufgabe

Der Erfindung liegt die Aufgabe zugrunde, ein verbessertes Verfahren zur Erkennung eines Anhängerbetriebes bei einem Zugfahrzeug, insbesondere als Teil eines Fahrdynamikregelungsverfahrens, vorzuschlagen, mit dem zuverlässig erkannt werden kann, ob das Zugfahrzeug sich im Anhängerbetrieb befindet oder nicht. Ferner besteht die Aufgabe darin, ein entsprechendes Steuergerät zur Durchführung des Verfahrens vorzuschlagen.

Technische Lösung

Diese Aufgabe wird mit einem Verfahren mit den Merkmalen des Anspruchs 1 sowie mit einem Steuergerät mit den Merkmalen des Anspruchs 21 gelöst.

Vorteilhafte Weiterbildungen sind in den Unteransprüchen angegeben.

Der Erfindung liegt der Gedanke zugrunde, anhand der Auswertung einer einem Fahrdynamikregelungssystem ohnehin zur Verfügung stehenden Größe darauf zu schließen, ob sich das Zugfahrzeug in einem Anhängerbetrieb befindet oder nicht. Auf Basis des Ergebnisses der Auswertung kann eine Anhängerlogik und/oder ein Fahrdynamikregelungssystem modifiziert, insbesondere aktiviert, deaktiviert, sensibilisiert und/oder desensibilisiert werden. Wird das Vorliegen eines Anhängerbetriebs erkannt, so kann die Anhängerschlingerlogik beispielsweise dadurch angepasst werden, dass diese empfindlicher eingestellt wird. Zusätzlich können Eingriffsschwellen abgesenkt werden. Entsprechend wird die Anhängerschlingerlogik abgeschwächt bzw. Eingriffsschwellen angehoben und dadurch Fehlanregungen verhindert, für den Fall, dass die Anhängererkennung keinen an das Zugfahrzeug angehängten Anhänger erkennt. Das erfindungsgemäße Verfahren kann jedoch auch unabhängig von einem Fahrdynamikregelungssystem eingesetzt werden und beispielsweise dazu dienen, bei Erkennen eines Anhängerbetriebs ein entsprechendes Signal auszugeben, insbesondere eine Signalleuchte im Fahrzeugcockpit zu aktivieren.

Erfindungsgemäß ist vorgesehen, dass das Verfahren zur Anhängererkennung auf einem Vergleich eines den Fahrzustand charakterisierenden Ist-Signals mit einem entsprechenden Soll-Signal basiert. Als den Fahrzustand charakterisierende Signale kommen insbesondere ein Gierratensignal und/oder ein Schwimmwinkelsignal und/oder ein Lenkwinkelsignal in Betracht. Bevorzugt werden Signale ausgewertet, die Schlingerbewegungen des Fahrzeugs repräsentieren. Die entsprechenden Ist-Signale können entweder mithilfe mindestens eines Sensors gemessen werden oder anhand anderer dynamischer Größen ermittelt bzw. abgeschätzt werden. Das entsprechende bzw. korrespondierende Soll-Signal wird anhand eines Referenzmodells mit mindestens einer Eingangsgröße ermittelt. Das Referenzmodell besteht beispielsweise aus mindestens einer Kennlinie und/oder mindestens einem Polynom. Soll beispielsweise das Ist-Gierratensignal mit einem Soll-Gierratensignal verglichen werden, so kann das Soll-Gierratensignal anhand der Ackermanngleichung

$$\dot{\Psi}_{Soll} = \frac{1}{L} * \frac{v}{1 + (v/v_{ch})^2} * \tan\delta$$

ermittelt werden. Dabei entspricht 5 dem Lenkwinkel, v der beispielsweise aus den Raddrehzahlen ermittelten Fahrzeuggeschwindigkeit (sog. Referenzgeschwindigkeit), L dem Radstand des Fahrzeugs und $v_{ch}$ der so genannten charakteristischen Geschwindigkeit. Bei der charakteristischen Geschwindigkeit handelt es sich um einen Systemparameter, der das Eigenlenkverhalten des Fahrzeugs beschreibt. Gleichzeitig wird die Ist-Gierrate über Sensoren gemessen, überwacht und ggf. unterschiedlich stark gefiltert.

In Ausgestaltung der Erfindung ist vorgesehen, dass die Erkennung des Anhängerbetriebs des Zugfahrzeugs in Abhängigkeit der Erkennung einer Phasenverschiebung zwischen dem Ist-Signal und dem Soll-Signal erfolgt. Der Erfindung liegt die Erkenntnis zugrunde, dass aufgrund der veränderten Fahreigenschaften im Anhängerbetrieb ein deutlicher Phasenverzug zwischen einem Ist-Signal und einem Soll-Signal auftritt. Das Auftreten einer derartigen Phasenverschiebung ist robust gegen verschiedene Größen und Ausführungsformen von Anhängern und Zufahrzeug-Anhänger-Kombinationen. Die Phasenverschiebung zwischen Soll- und Ist-Signal wird erfindungsgemäß zum zuverlässigen Erkennen des Anhängerbetriebes herangezogen, wobei die Auswertung der Phasenverschiebung durch eine Auswertung des richtungsmäßigen Verlaufs des Ist-Signals und des Soll-Signals erfolgt.

Zusätzlich oder alternativ zur Auswertung der Phasenverschiebung zwischen Ist-Signal und Soll-Signal kann ein Vergleich der Amplitudendifferenz zwischen Ist-Signal und Soll-Signal erfolgen. Insbesondere beim Gierratensignal ergibt sich bei Anhängerbetrieb eine Vergrößerung der Differenz der Amplituden beider Signale. Werden Phasenverschiebung und Amplitudendifferenz kumulativ ausgewertet, verbessert dies die Zuverlässigkeit der Anhängererkennung.

In Ausgestaltung der Erfindung ist mit Vorteil vorgesehen, dass ein Überschreiten einer Grenzphasenverschiebung als Anhängerbetrieb gewertet wird. Bevorzugt wird bei jedem Überschreiten einer Grenzphasenverschiebung der Zählerstand eines Zählers verändert und/oder ein Merker gesetzt. Bei Erreichen eines bestimmten Zählerstandes wird dann auf das Vorliegen eines Anhängerbetriebs erkannt. Alternativ ist es auch denkbar unmittelbar bei Überschreiten einer Grenzphasenverschiebung auf einen Anhängerbetrieb zu erkennen. Analogerweise ist in Ausgestaltung der Erfindung vorgesehen, dass ein Überschreiten einer Grenzamplitudendifferenz als Anhängerbetrieb gewertet wird. Insbesondere wird in Abhängigkeit des Überschreitens einer Grenzamplitudendifferenz der Zählerstand eines Zählers verändert und/oder ein Merker gesetzt. Insbesondere handelt es sich um denselben Zähler, der bei Überschreiten einer Grenzphasenverschiebung variiert wird. In Weiterbildung der Erfindung wird ein Anhängerbetrieb dann erkannt, wenn der Zählerstand, der bei Überschreiten einer Grenzphasenverschiebung und/oder einer Grenzamplitudendifferenz variiert wird, einen vorgegebenen Grenzwert erreicht, überschreitet oder unterschreitet.

In Weiterbildung der Erfindung ist mit Vorteil vorgesehen, dass die Auswertung der Phasenverschiebung durch eine Auswertung der gleichsinnigen und/oder gegensinnigen Verläufe des Ist-Signals und des Soll-Signals erfolgt.

Gemäß einer bevorzugten Ausführungsform der Erfindung werden die Anzahl der Zyklen gezählt, in denen sich das Ist-Signal und das Soll-Signal in die gleiche bzw. in die entgegengesetzte Richtung bewegen. Bewegen sich Ist-Signal und Soll-Signal in die gleiche Richtung, d.h. beide werden gleichzeitig größer oder kleiner, so wird ein Zähler in diesem Zyklus gerändert, bevorzugt erhöht. Bewegen sich dagegen Ist-Signal und Soll-Signal in die entgegengesetzte Richtung wird der Zähler in entgegengesetzte Richtung geändert, bevorzugt verringert. Die Erhöhung bzw. Verringerung des Zählerstandes kann in unterschiedlicher Art und Weise erfolgen. Zweckmäßigerweise erfolgt die Veränderung des Zählerstandes linear durch Addition bzw. Subtraktion einer Konstanten in jedem Zyklus, oder durch Multiplikation des Zählerstandes aus dem vorangegangenen Zyklus mit einem Faktor und einer entsprechenden Initialisierung für den Standardwert. Gemäß der bevorzugten Ausführungsform wird das Vorzeichen eines Produktes aus einer Ist-Signaldifferenz und einer Soll-Signaldifferenz bewertet. Dabei wird die Ist-Signaldifferenz aus dem Ist-Signal des vorliegenden Abfragezyklus und einem Ist-Signal eines vorherigen Abfragezyklus, bevorzugt des letzten Abfragezyklus, gebildet. Analogerweise wird die Soll-Signaldifferenz gebildet. Das Vorzeichen zeigt an, ob sich Ist-Signal und Soll-Signal in die gleiche bzw. in entgegengesetzte Richtung bewegen. Bewegen sie sich in entgegengesetzte Richtungen, ist also das Vorzeichen negativ, wird eine Phasenverschiebung im vorliegenden Abfragezyklus bejaht.

In Weiterbildung der Erfindung ist mit Vorteil vorgesehen, dass der Zählerstand, der die Anzahl der Produkte mit positivem bzw. negativem Vorzeichen repräsentiert auf einen bestimmten Wert begrenzt ist. Wird beispielsweise bei einem positiven Vorzeichen der Zählerstand erhöht und wäre der maximale Zählerstand nicht begrenzt, so müsste erst eine sehr große Anzahl von Produkten mit negativen Vorzeichen gezählt werden, damit ein vorgegebener Grenzwert unterschritten und damit auf das Vorliegen eines Anhängerbetriebs geschlossen werden könnte. Die Erkennung eines Anhängers würde also zeitverzögert erfolgen.

Es ist zweckmäßig, den Zählerstand des vorgenannten Zählers in Abhängigkeit des Ergebnisses der Auswertung der Amplitudendifferenz zwischen Ist-Signal und Soll-Signal zu verändern. Überschreitet die Amplitudendifferenz einen vorgegebenen Wert, so deutet dies auf das Vorliegen eines Anhängerbetriebs hin und der Zählerstand wird in die gleiche Richtung verändert, wie bei der Detektion einer Phasenverschiebung bzw. bei der Überschreitung einer Grenzphasenverschiebung.

Die Veränderung des Zählerstandes in Abhängigkeit der Amplitudendifferenz kann beispielsweise durch Multiplikation des Zählerstandes mit einem Quotienten erfolgen. Bevorzugt ist der Quotient gebildet aus der Amplitudendifferenz die vorliegen würde, falls kein Anhänger angehängt wäre sowie der Amplitudendifferenz mit Anhänger. Je nach Zählrichtung kann der Zählerstand auch mit einem reziprok gebildeten Quotienten gebildet werden.

In Ausgestaltung der Erfindung ist mit Vorteil vorgesehen, dass der Zählerstand mit einem Grenzzählerstand verglichen wird. Erreicht der Zählerstand einen Grenzzählerstand, wird auf das Vorliegen eines Anhängerbetriebs geschlossen bzw. ein Anhängerbetrieb erkannt.

Gemäß einer zweckmäßigen Weiterbildung der Erfindung ist vorgesehen, dass in Abhängigkeit des Erkennens eines Anhängerbetriebs bzw. eines Nicht-Anhängerbetriebs eine Anhängerschlingerlogik und/oder ein Fahrdynamikregelungssystem beeinflusst wird. So kann beispielsweise eine Anhängerschlingerlogik bei Erkennen eines Nicht-Anhängerbetriebs abgeschaltet oder desensibilisiert werden. Zusätzlich oder alternativ ist es denkbar, bei erkanntem Anhängerbetrieb Fahrstabilisierungseingriffe zum Zweck der Verringerung der speziell im Anhängerbetrieb auftretenden Instabilitäten zu aktivieren. Weiterhin kann zusätzlich oder alternativ bei erkanntem Nicht-Anhängerbetrieb eine Deaktivierung oder Abschwächung von Fahrstabilisierungseingriffen erfolgen.

In Ausgestaltung der Erfindung ist mit Vorteil vorgesehen, dass eine Modifizierung des Verhaltens des Fahrdynamikregelungssystems auch für den Fall erfolgt, dass das Zug-Fahrzeug unabhängig von einer Fahrervorgabe, beispielsweise durch Fahrbahneigenschaften, zu Schwingungen angeregt wird. Dies kann dadurch realisiert werden, dass das Referenzmodell zusätzlich oder alternativ zu Fahrervorgaben charakterisierende Eingangsgrößen, wie beispielsweise dem Lenkwinkel, entsprechende fahrervorgabenunabhängige Eingangsgrößen, wie beispielsweise den Schwimmwinkel, berücksichtigt.

Gemäß einer bevorzugten Ausführungsform der Erfindung ist vorgesehen, dass die Freigabe zur Auswertung der Phasenverschiebung zwischen Ist-Signal und Soll-Signal an mindestens eine Bedingung geknüpft ist. Bevorzugt bleibt die Erkennung der Phasenverschiebung noch für einen vorgegebenen Zeitraum nach Verletzung der Bedingung aktiv. Als Bedingung für die Aktivierung der Auswertung der Phasenverschiebung kann beispielsweise eine ausreichende Änderung des Lenkwinkels oder das Überschreiten einer Schwelle des Ist-Signals herangezogen, dass die Anhängerschwingung bzw. die durch die Anhängerschwingung verursachte Schwingung des Zugfahrzeugs bzw. des Gespanns charakterisiert. Sind diese Bedingungen erfüllt, wird die Auswertung bzw. Erkennung der Phasenverschiebung für einen parametrisierbaren Zeitraum freigegeben, indem die Erkennung bei Verletzung der Bedingung aktiviert bleibt (Hysterese). Bei Deaktivierung der Phasenverschiebungsauswertung werden die bei Erkennung verwendeten Größen, beispielsweise Zählerstände, oder gesetzte bzw. nicht gesetzte Merker zweckmäßigerweise auf einen Initialisierungswert zurückgesetzt.

Die Erfindung betrifft weiterhin ein Steuergerät, das derart ausgebildet ist, dass es das vorgenannte Verfahren ausführen kann. Bevorzugt ist das Verfahren in ein Steuergerät eines Fahrdynamikregelungssystems implementiert.

Kurze Beschreibung der Zeichnungen

Weitere Vorteile und zweckmäßige Ausführungen der Erfindung sind den weiteren Ansprüchen, der Figurenbeschreibung und den Zeichnungen zu entnehmen. Es zeigen:

Fig. 1     eine schematisierte Darstellung eines Fahrdynamikregelungssystems,

Fig. 2     ein schematisches Ablaufdiagramm eines Fahrdynamikregelungsverfahrens,

Fig. 3     einen Ablauf einer Phasenverschiebungsauswertung,

Fig. 4     den Signalverlauf der Ist- und der Soll-Gierrate im Nicht-Anhängerbetrieb und

Fig. 5     den Signalverlauf der Ist- und Soll-Gierrate im Anhängerbetrieb.

Ausführungsformen der Erfindung

In den Figuren sind gleiche Bauteile und Bauteile mit gleicher Funktion mit den gleichen Bezugszeichen gekennzeichnet.

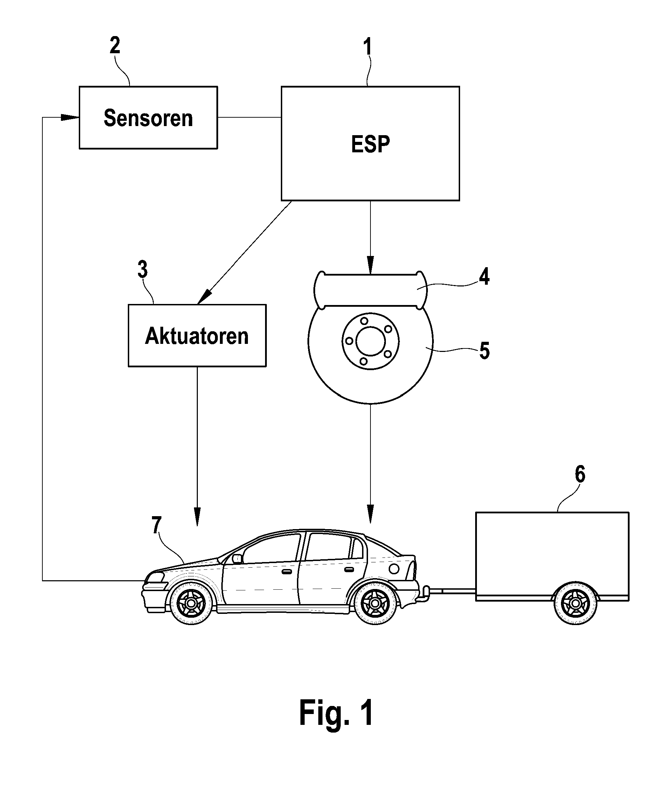

Fig. 1 zeigt eine schematische Darstellung der Systemarchitektur eines komplexen Regelsystems, das ein Fahrdynamikregelungssystem umfasst. Das Fahrdynamikregelungssystem umfasst ein Steuergerät 1, in dem ein Regelalgorithmus, im vorliegenden Fall ESP (elektronisches Stabilitätsprogramm) als Programmmodul sowie eine Anhängerschlingerlogik hinterlegt ist. Ferner umfasst das Fahrdynamikregelungssystem eine Sensorik 2 zur Bestimmung des Ist-Verhaltens, also mindestens eines Ist-Signals sowie mehrere Stellglieder 3, 4, 5, wie beispielsweise ein Motor-Steuergerät, einen Lenksteller etc. sowie eine Radbremse 5 zur Beeinflussung des Fahrverhaltens. Bei Überschreiten einer vorgegebenen Eingriffsschwelle, d.h. einer vorgegebenen Regelabweichung, wird beispielsweise die Bremse 5 betätigt, um das Gierverhalten eines Fahrzeugs 7 an einen Sollwert anzupassen und somit das Fahrzeug zu stabilisieren. Im Anhängerbetrieb, also bei angehängtem Anhänger 6 ist es denkbar, weitere Eingriffe durchzuführen um Fahrzustände, welche insbesondere im Zugbetrieb auftreten, z.B. ein Anhängerschlingern, zu stabilisieren.

In dem Steuergerät 1 ist ein Referenzmodell implementiert, mittels dem anhand mindestens einer Eingangsgröße, beispielsweise des Lenkwinkels und/oder der Fahrzeuggeschwindigkeit ein Soll-Signal ermittelt werden kann. Erfindungsgemäß vergleicht das Steuergerät 1 das Ist-Signal mit dem Soll-Signal hinsichtlich bestimmter Eigenschaften und stellt somit in Abhängigkeit der Erfüllung bestimmter Zusammenhänge einen Anhängerbetrieb oder einen Nicht-Anhängerbetrieb fest.

Im Folgenden wird die Erfindung anhand eines Vergleichs von einem Ist- mit einem Soll-Gierratensignal erläutert. Die Erfindung ist jedoch nicht auf den Vergleich von Gierratensignalen beschränkt. Zusätzlich oder alternativ können weitere, die Schlingerbewegungen eines Fahrzeugs charakterisierenden Merkmale zur Bewertung herangezogen werden, ob ein Anhängerbetrieb vorliegt oder nicht.

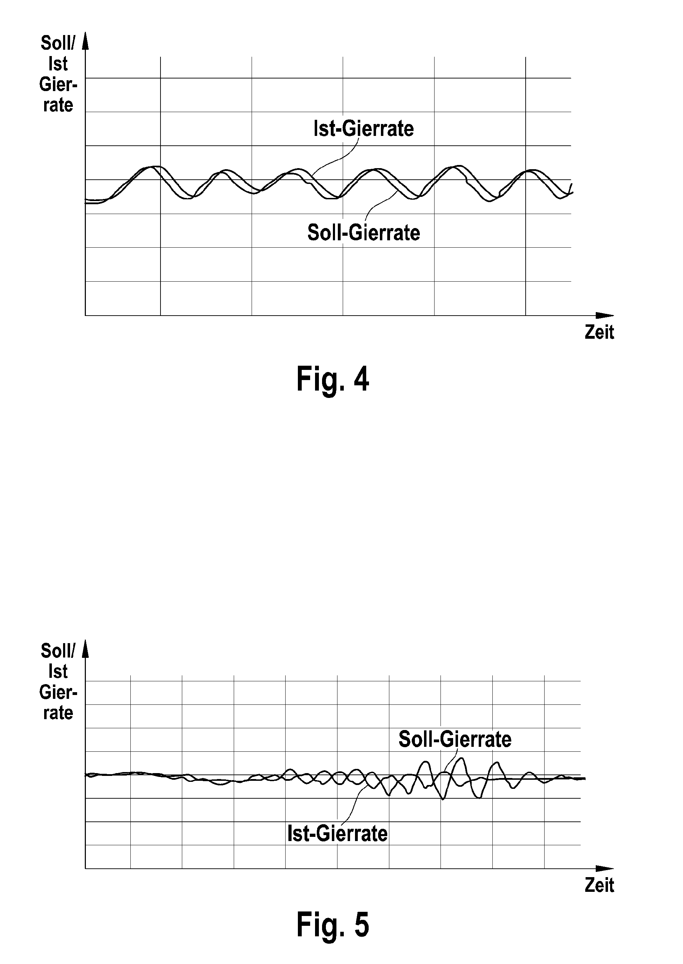

Wie sich aus einem Vergleich zwischen Fig. 4 (Nicht-Anhängerbetrieb) und Fig. 5 (Anhängerbetrieb) ergibt tritt aufgrund der veränderten Fahreigenschaften im Anhängerbetrieb (vgl. Fig. 5) ein deutlicher Phasenverzug im Bereich von 90° zwischen dem Ist- und dem Soll-Gierratensignal auf. Das Ist-Gierratensignal eilt dem Soll-Gierratensignal im Anhängerbetrieb um etwa 90° voraus.

Darüber hinaus ergibt sich bei Anhängerbetrieb (vgl. Fig. 5) eine Vergrößerung der Differenz der Amplituden beider Signale. Im Folgenden werden die Amplitudendifferenz und die Phasenverschiebung kumulativ zur Bewertung herangezogen, ob sich das Zugfahrzeug im Anhängerbetrieb befindet oder nicht. Es ist auch denkbar ausschließlich die Phasenverschiebung oder ausschließlich die Amplitudendifferenz für eine derartige Bewertung heranzuziehen.

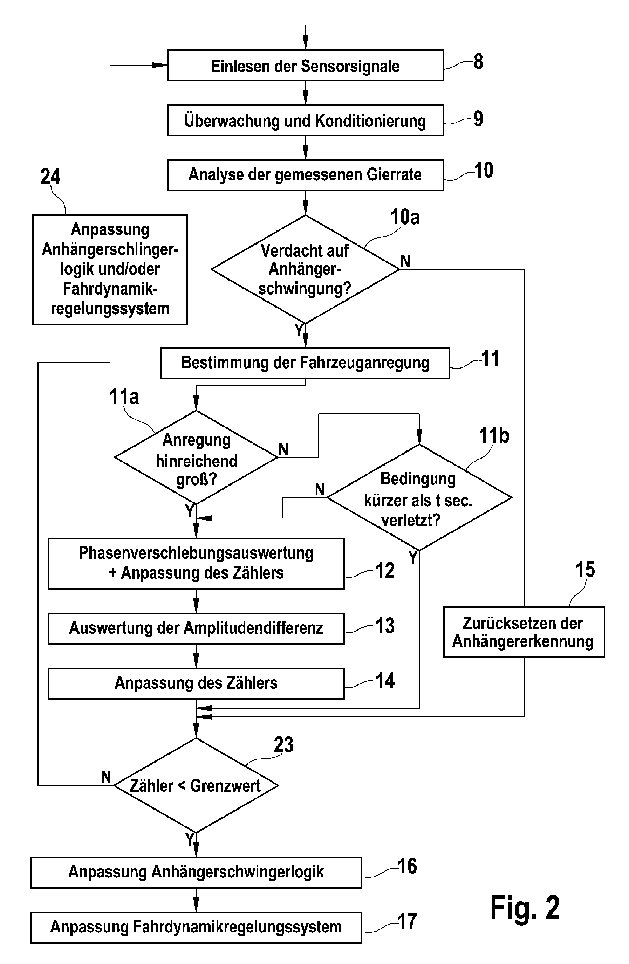

In Fig. 2 ist in einem Flussdiagramm schematisch der Verfahrensablauf in einem Fahrdynamikregelungssystem mit integrierter Anhängererkennung dargestellt. In einem ersten Verfahrensschritt 8 werden zunächst verschiedene Sensorsignale der Sensorik eingelesen, unter anderem das Ist-Gierratensignal. In einem darauf folgenden zweiten Schritt 9 werden die eingelesenen Signale überwacht und konditioniert. Die Signale werden also gefiltert und plausibilisiert. Bei nicht plausiblen Signalen können beispielsweise bestimmte Sensoren abgeschaltet oder deren Empfindlichkeit modifiziert werden. Zusätzlich oder alternativ kann der Signalfluss unterbrochen werden.

In einem darauf folgenden dritten Schritt werden die plausibilisierten Sensorsignale analysiert und es wird im Schritt 10a festgestellt, ob der Verdacht auf eine Anhängerschwingung vorliegt oder nicht. Es wird beispielsweise überprüft, ob überhaupt ein Schwingungsverhalten des Fahrzeugs festgestellt werden kann oder nicht. Ist dies nicht der Fall, so wird im Schritt 15 die Anhängererkennung zurückgesetzt. Insbesondere werden eventuell gesetzte Marker auf null gesetzt und Zählerstände auf einen Startwert zurückgesetzt.

Liegt der Verdacht auf eine Anhängerschwingung vor, so wird in Schritt 11 auf Basis der Ist-Gierrate eine die Anregung des Gespanns repräsentierende Größe ermittelt, bevorzugt durch Filterung aus dem Gierratensignal. Es wird sodann in Schritt 11a überprüft, ob eine hinreichend große Anregung des Gespanns, z.B. durch den Fahrer, wahlweise durch ein Fahrerassistentensystem oder ein anderes System vorliegt oder nicht.

Liegt keine hinreichend große Anregung vor, so wird mit Schritt 11b fortgefahren. In Schritt 11b wird überprüft, wie lange die Bedingung zur Aktivierung der Phasenverschiebungserkennung nicht mehr erfüllt ist. Ist eine vorgegebene Zeitspanne oder eine vorgegebene Anzahl von Zyklen, etc. noch nicht überschritten, ist also die Anregung zu klein, so bleibt die Phasenverschiebungserkennung gemäß Schritt 12 weiterhin aktiv (Hysterese). Erst nach Ablauf der Zeitspanne wird die Erkennung abgeschaltet. Ansonsten geht es mit Schritt 23 weiter.

Ist die Anregung jedoch hinreichend groß, überschreitet beispielsweise die Amplitude, bevorzugt über mehrere Zyklen, einen bestimmten Wert, so wird in Schritt 11 die Phasenerkennung aktiviert und nach Wegfall der Bedingung für einen parametrisierten Zeitraum aufrechterhalten.

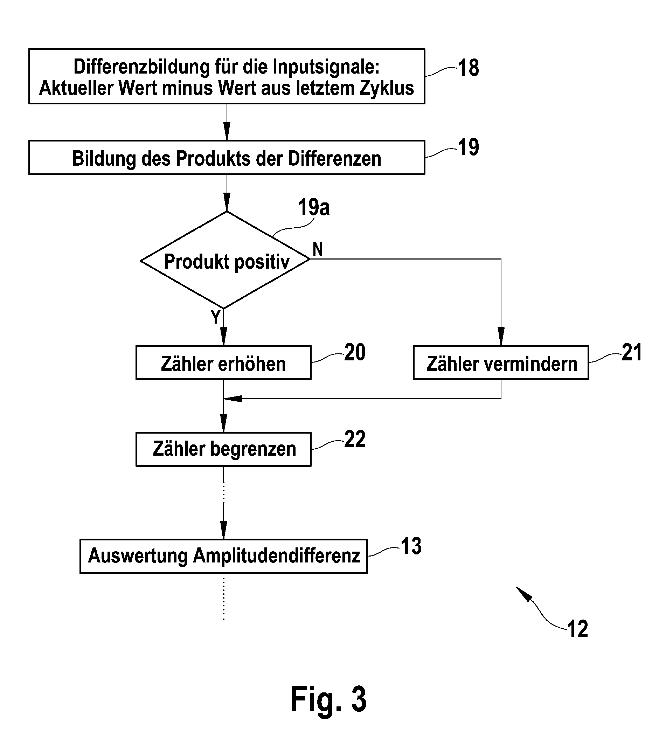

Die Phasenerkennung gemäß Schritt 12 ist detailliert in Fig. 3 erläutert und wird später im Detail beschrieben. Als Ergebnis der Phasenverschiebungserkennung gemäß Schritt 12 wird der Zählerstand eines Zählers erhöht oder erniedrigt.

Daraufhin erfolgt in Schritt 13 die Auswertung der Amplitudendifferenz zwischen Ist- und Sollgierratensignal. Als Ergebnis dieser Auswertung wird der Zähler gemäß Schritt 12 in Schritt 14 angepasst. Beispielsweise erfolgt die Multiplikation des Zählerstandes aus Schritt 12 in Schritt 14 mit einem Quotienten. Im bevorzugten Fall besteht der Quotient aus der Amplitudendifferenz ohne Anhänger und der Amplitudendifferenz mit Anhänger. Demnach wird der Zählerstand bei Multiplikation mit diesem Quotienten reduziert.

Nach Schritt 14 wird der Abfrageschritt 23 durchgeführt. Hier erfolgt das eigentliche Erkennen, ob ein Anhängerbetrieb vorliegt oder nicht. Im vorliegenden Fall wird auf das Vorhandensein eines Anhängerbetriebs geschlossen, wenn der Zählerstand einen vorgegebenen Grenzwert unterschreitet.

Unterschreitet der Zählerstand einen Grenzwert, ist also ein Anhänger angehängt, wird in Schritt 16 die Anhängerschlingerlogik entsprechend angepasst, z. B. aktiviert. In Schritt 17 erfolgt wahlweise die Anpassung des Fahrdynamikregelungssystems, insbesondere eine Sensibilisierung.

Wird auf Nicht-Anhängerbetrieb erkannt, so wird in Schritt 24 ebenfalls die Anhängerschlingerlogik und/oder das Fahrdynamikregelsystem angepasst. Insbesondere erfolgt in Schritt 24 ein Desensibilisierung und/oder eine Deaktivierung der Anhängerschlingerlogik.

Wie erwähnt, ist in Fig. 3 die Phasenverschiebungsauswertung gemäß Schritt 12 aus Fig. 2 im Detail erläutert. Das in den in Fig. 2 und Fig. 3 in Form eines Flussdiagramms skizzierte Programm läuft in der bevorzugten Ausführungsform in dem der Steuereinheit 1 zugeordneten Mikroprozessor ab.

In einem Verfahrensschritt 18 wird zunächst die Differenz vom aktuellen Wert des Ist-Gierratensignals zu dem Wert des Ist-Gierratensignals aus dem letzten Abfragezyklus berechnet. Ebenso wird in Schritt 18 die Differenz vom aktuellen Wert des Soll-Gierratensignals zu dem Wert des Soll-Gierratensignals aus dem letzten Abfragezyklus berechnet. In einem darauf folgenden Schritt 19 wird das Produkt der Differenzen der Ist- und Soll-Gierratensignale ermittelt.

Ist das Vorzeichen der Differenzen positiv, so bewegen sich beide Signale in die gleiche Richtung. Dies wird als Indiz dafür gewertet, dass die Signale weitgehend in Phase sind. Aus diesem Grund wird für diesen Fall für einen Schritt 20 ein Zähler hochgezählt. Wahlweise kann in Schritt 19a der Zähler, ausgehend von einem Startwert multipliziert werden. Ist das Produkt negativ, so wird in einem Schritt 21 der Zähler vermindert und nach unten, z.B. auf den Initialisierungswert begrenzt. Wahlweise kann in Schritt 21 der Zähler mit einem Vergessfaktor multipliziert werden.

In Schritt 22 erfolgt eine Begrenzung des Anwachsens des Zählers auf einen oberen Wert erfolgen. Hierdurch wird vermieden, dass eine zu große Anzahl von Zählerverminderungsschritten notwendig ist, um einen unteren Grenzwert zu erreichen und somit in Schritt 23 gemäß Fig. 2 das Vorliegen eines Anhängerbetriebs bejahen zu können.

Nach Schritt 22 geht es mit Schritt 13 gemäß Fig. 2 weiter. Die Amplitudendifferenz wird ausgewertet und das Zählerergebnis aus der Phasenverschiebungsauswertung in Schritt 14 auf Basis der Amplitudendifferenzauswertung modifiziert, insbesondere mit dem vorgenannten Quotienten multipliziert.

## Patentansprüche

1. Verfahren zur Erkennung eines Anhängerbetriebs, d.h. einem angehängten Anhänger, bei einem Zugfahrzeug, insbesondere als Teil eines Fahrdynamikregelungssystems mit einer Anhängerschlingerlogik zum Stabilisieren des Gespanns aus Zugfahrzeug und Anhänger,
   **dadurch gekennzeichnet,**
   **dass** die Erkennung des Anhängerbetriebs durch einen Vergleich eines den Fahrzustand charakterisierenden Ist-Signals mit einem korrespondierenden Soll-Signal erfolgt,
   wobei zur Erkennung des Anhängerbetriebs die Phasenverschiebung zwischen dem Ist-Signal und dem Soll-Signal ausgewertet wird,
   wobei die Auswertung der Phasenverschiebung durch eine Auswertung des richtungsmäßigen Verlaufs des Ist-Signals und des Soll-Signals erfolgt.

2. Verfahren nach Anspruch 1,
   **dadurch gekennzeichnet,**
   **dass** das Ist-Signal ein Ist-Gierratensignal und das Soll-Signal ein Soll-Gierratensignal ist, und/oder dass das Ist-Signal ein Ist-Schwimmwinkelsignal und das Soll-Signal ein Soll-Schwimmwinkelsignal ist, und/oder das Ist-Signal ein Ist-Lenkwinkelsignal und das Soll-Signal ein Soll-Lenkwinkelsignal ist.

3. Verfahren nach einem der vorhergehenden Ansprüche,
   **dadurch gekennzeichnet,**
   **dass** das Soll-Signal anhand eines Referenzmodells mit mindestens einer Eingangsgröße, insbesondere dem Lenkwinkel und/oder der Fahrzeuggeschwindigkeit, ermittelt wird.

4. Verfahren nach einem der vorhergehenden Ansprüche,
   **dadurch gekennzeichnet,**
   **dass** zur Erkennung des Anhängerbetriebs die Amplitudendifferenz zwischen dem Ist-Signal und dem Soll-Signal ausgewertet wird.

5. Verfahren nach einem der Anspruch 1,
   **dadurch gekennzeichnet,**
   **dass** ein Überschreiten einer Grenzphasenverschiebung als Anhängerbetrieb gewertet wird, insbesondere in dem der Zählerstand eines Zähler geändert wird.

6. Verfahren nach einem der Anspruch 4,
**dadurch gekennzeichnet,**
**dass** ein Überschreiten einer Grenzamplitudendifferenz als Anhängerbetrieb gewertet wird, insbesondere in dem der Zählerstand eines Zähler geändert wird.

7. Verfahren nach einem der Ansprüche 5 oder 6,
**dadurch gekennzeichnet,**
**dass** ein Anhängerbetrieb erkannt wird, wenn die Grenzphasenverschiebung und/oder Grenzamplitudendifferenz über eine vorgegebene Zeitspanne hinweg überschritten wird, oder wenn eine vorgegebene Anzahl an Überschreitungen detektiert wird.

8. Verfahren nach Anspruch 1,
**dadurch gekennzeichnet,**
**dass** die Auswertung der Phasenverschiebung durch eine Auswertung der gleichsinnigen und/oder gegensinnigen Verläufe des Ist-Signals und des Soll-Signals erfolgt.

9. Verfahren nach Anspruch 8,
**dadurch gekennzeichnet,**
**dass** eine Ist-Signaldifferenz aus dem momentanen Ist-Signal und einem Ist-Signal eines vorherigen Abfragezyklus, vorzugsweise des letzten Abfragezyklus, gebildet wird, und dass ein Produkt aus der Ist-Signaldifferenz und einer Soll-Signaldifferenz gebildet wird, wobei die Soll-Signaldifferenz aus dem momentanen Soll-Signal und einem Soll-Signal eines vorherigen Abfragezyklus, vorzugsweise des letzten Abfragezyklus, gebildet wird, und dass eine Wertung als Anhängerbetrieb in Abhängigkeit des Vorzeichens des Produkts erfolgt.

10. Verfahren nach Anspruch 9,
**dadurch gekennzeichnet,**
**dass** in Abhängigkeit des Vorzeichens des Produkts ein Zählerstand eines Zählers verändert wird, insbesondere dass bei einem positiven Vorzeichen der Zählerstand eines Zählers erhöht und bei einem negativen Vorzeichen der Zählerstand reduziert wird.

11. Verfahren nach Anspruch 10,
**dadurch gekennzeichnet,**
**dass** der maximale und/oder minimale Zählerstand begrenzt ist.

12. Verfahren nach einem der Ansprüche 10 oder 11,
**dadurch gekennzeichnet,**
**dass** der Zählerstand in Abhängigkeit des Ergebnisses der Auswertung der Amplitudendifferenz zwischen dem Ist-Signal und dem Soll-Signal verändert wird, insbesondere dass der Zählerstand bei Überschreiten der Grenzamplitudendifferenz reduziert wird.

13. Verfahren nach Anspruch 12,
**dadurch gekennzeichnet,**
**dass** der Zählerstand mit einem Quotienten aus der Amplitudendifferenz ohne Anhänger und der Amplitudendifferenz mit Anhänger, oder mit einem reziproken Quotienten, multipliziert wird.

14. Verfahren nach einem der Ansprüche 10 bis 13,
**dadurch gekennzeichnet,**
**dass** bei Erreichen eines Grenzzählerstandes ein Anhängerbetrieb erkannt wird.

15. Verfahren nach einem der vorhergehenden Ansprüche,
**dadurch gekennzeichnet,**
**dass** bei Erkennen eines Nicht-Anhängerbetriebs eine Anhängerschlingerlogik eines Fahrdynamikregelungssystems, vorzugsweise zeitweise, abgeschaltet oder desensibilisiert wird.

16. Verfahren nach einem der vorhergehenden Ansprüche,
**dadurch gekennzeichnet,**
**dass** bei erkanntem Anhängerbetrieb das Verhalten eines Fahrdynamikregelungssystems modifiziert wird, insbesondere eine Aktivierung von Fahrstabilisierungseingriffen, vorzugsweise von Fahrstabilisierungseingriffen zum Zwecke der Verringerung der speziell im Anhängerbetrieb auftretenden Instabilitäten, erfolgt.

17. Verfahren nach einem der vorhergehenden Ansprüche,
**dadurch gekennzeichnet,**
**dass** bei erkanntem Nicht-Anhängerbetrieb das Verhalten eines Fahrdynamikregelungssystems modifiziert wird, insbesondere eine Deaktivierung oder Abschwächung von Fahrstabilisierungseingriffen, vorzugsweise von Fahrstabilisierungseingriffen zum Zwecke der Verringerung der speziell im Anhängerbetrieb auftretenden Instabilitäten, erfolgt.

18. Verfahren nach einem der Ansprüche 16 oder 17,
**dadurch gekennzeichnet,**
**dass** eine Modifizierung des Verhaltens des Fahrdynamikregelungssystems auch für den Fall erfolgt, dass das Zug-Fahrzeug zu Schwingungen angeregt wird, obwohl keine Fahrervorgabe vorliegt, das Fahrzeug in einen anderen Fahrzustand zu versetzten.

19. Verfahren nach Anspruch 1,
**dadurch gekennzeichnet,**
**dass** die Freigabe zur Auswertung der Phasenverschiebung zwischen Ist-Signal und Soll-Signal an mindestens eine Bedingung geknüpft ist, und vorzugsweise dass die Erkennung der Phasenverschiebung für einen parametrisierbaren Zeitraum nach Verletzung der Bedingung aktiviert bleibt.

**20.** Verfahren nach einem der Anspruch 1,
**dadurch gekennzeichnet,**
**dass** bei Deaktivierung der Auswertung der Phasenverschiebung zwischen Ist-Signal und Soll-Signal die verwendeten Größen, insbesondere ein Zählerstand, zurückgesetzt werden.

**21.** Steuergerät das ein Verfahren nach einem der vorhergehenden Ansprüche durchführt.

**Claims**

**1.** Method for identifying a trailer operation, i.e. a coupled trailer, of a towing vehicle, in particular as part of a vehicle movement dynamics control system having a trailer jack-knifing logic for stabilizing the vehicle combination of the towing vehicle and the trailer,
**characterized**
**in that** the trailer operation is identified by comparing an actual signal which characterizes the driving state with a corresponding setpoint signal, wherein in order to identify the trailer operation the phase shift between the actual signal and the setpoint signal is evaluated,
wherein the evaluation of the phase shift is carried out by an evaluation of the directional profile of the actual signal and the setpoint signal.

**2.** Method according to Claim 1,
**characterized**
**in that** the actual signal is an actual yaw rate signal, and the setpoint signal is a setpoint yaw rate signal, and/or in that the actual signal is an actual side slip angle signal and the setpoint signal is a setpoint side slip angle signal and/or the actual signal is an actual steering angle signal and the setpoint signal is a setpoint steering angle signal.

**3.** Method according to one of the preceding claims,
**characterized**
**in that** the setpoint signal is determined on the basis of a reference model having at least one input variable, in particular the steering angle and/or the vehicle speed.

**4.** Method according to one of the preceding claims,
**characterized**
**in that** in order to identify the trailer operation the amplitude difference between the actual signal and the setpoint signal is evaluated.

**5.** Method according to Claim 1,
**characterized**
**in that** an upward transgression of a limiting phase shift is evaluated as a trailer operation, in particular in that the counter reading of a counter is changed.

**6.** Method according to Claim 4,
**characterized**
**in that** an upward transgression of a limiting amplitude difference is evaluated as a trailer operation, in particular in that the counter reading of a counter is changed.

**7.** Method according to one of Claims 5 or 6,
**characterized**
**in that** a trailer operation is identified if upward transgression of the limiting phase shift and/or limiting amplitude difference occurs over a predefined time period or if the upward transgression is detected a predefined number of times.

**8.** Method according to Claim 1,
**characterized**
**in that** the evaluation of the phase shift is carried out by evaluating the profiles of the actual signal and the setpoint signal in the same direction and/or in opposing directions.

**9.** Method according to Claim 8,
**characterized**
**in that** an actual signal difference is formed from the instantaneous actual signal and an actual signal of a preceding interrogation cycle, preferably of the last interrogation cycle, and in that a product of the actual signal difference and of a setpoint signal difference is formed, wherein the setpoint signal difference is formed from the instantaneous setpoint signal and a setpoint signal of a preceding interrogation cycle, preferably of the last interrogation cycle, and in that an evaluation as a trailer operation occurs as a function of the sign of the product.

**10.** Method according to Claim 9,
**characterized**
**in that** a counter reading of a counter is changed as a function of the sign of the product, in particular in that in the case of a positive sign the counter reading of a counter is incremented, and in the case of a negative sign the counter reading is reduced.

**11.** Method according to Claim 10,
**characterized**
**in that** the maximum and/or minimum counter readings are limited.

**12.** Method according to one of Claims 10 or 11,
**characterized**
**in that** the counter reading is changed as a function of the result of the evaluation of the amplitude difference between the actual signal and the setpoint signal, in particular in that the counter reading is reduced in the case of upward transgression of the limiting amplitude difference.

13. Method according to Claim 12, **characterized in that** the counter reading is multiplied by a quotient formed from the amplitude difference without a trailer and the amplitude difference with a trailer, or with a reciprocal quotient.

14. Method according to one of Claims 10 to 13, **characterized in that** when a limiting counter reading is reached a trailer operation is identified.

15. Method according to one of the preceding claims, **characterized in that** when a non-trailer operation is identified a trailer jack-knifing logic of a vehicle movement dynamics control system is switched off or desensitized, preferably temporarily.

16. Method according to one of the preceding claims, **characterized in that** when a trailer operation is identified the behaviour of a vehicle movement dynamics control system is modified, in particular vehicle movement dynamics control interventions, in particular vehicle movement dynamics control interventions for the purpose of reducing the instabilities occurring specifically in the trailer operation, are activated.

17. Method according to one of the preceding claims, **characterized in that** when a non-trailer operation is identified the behaviour of a vehicle movement dynamics control system is modified, in particular vehicle movement dynamics control interventions, preferably vehicle movement dynamics control interventions for the purpose of reducing the instabilities occurring specifically in the trailer operation, are deactivated or attenuated.

18. Method according to one of Claims 16 or 17, **characterized in that** the behaviour of the vehicle movement dynamics control system is modified even in the event of the towing vehicle being excited to experience oscillations although the driver has not made a prescription for the vehicle to be placed in a different driving state.

19. Method according to Claim 1, **characterized in that** the enabling of the evaluation of the phase shift between the actual signal and the setpoint signal is linked to at least one condition, and preferably in that the identification of the phase shift remains activated for a parameterizable time period after the infringement of the condition.

20. Method according to Claim 1, **characterized in that** when the evaluation of the phase shift between the actual signal and the setpoint signal is deactivated, the variables which are used, in particular a counter reading, are reset.

21. Control unit which carries out a method according to one of the preceding claims.

**Revendications**

1. Procédé de détection d'un fonctionnement avec remorque, c'est-à-dire d'une remorque attelée, pour un véhicule tracteur, en particulier dans le cadre d'un système de régulation de la dynamique de roulage doté d'une logique de roulis de remorque qui stabilise l'attelage constitué du véhicule tracteur et de la remorque, **caractérisé en ce que**

la détection du fonctionnement avec remorque s'effectue par une comparaison entre un signal effectif qui caractérise l'état de roulage et un signal de consigne correspondant, **en ce que** le déphasage entre le signal effectif et le signal de consigne est évalué pour détecter le fonctionnement avec remorque et **en ce que** l'évaluation du déphasage s'effectue par une évaluation du déroulement correct du signal effectif et du signal de consigne.

2. Procédé selon la revendication 1, **caractérisé en ce que** le signal effectif est un signal de taux de lacet effectif et le signal de consigne est un signal de taux de lacet de consigne, et/ou **en ce que** le signal effectif est un signal d'angle de flottement effectif et le signal de consigne est un signal d'angle de flottement de consigne et/ou **en ce que** le signal effectif est un signal d'angle de braquage effectif et le signal de consigne est un signal d'angle de braquage de consigne.

3. Procédé selon l'une des revendications précédentes, **caractérisé en ce que** le signal de consigne est déterminé à l'aide d'un modèle de référence et d'au moins une grandeur d'entrée, en particulier l'angle de braquage et/ou la vitesse du véhicule.

4. Procédé selon l'une des revendications précédentes, **caractérisé en ce que** la différence d'amplitude entre le signal effectif et le signal de consigne est évaluée pour détecter le fonctionnement avec remorque.

**5.** Procédé selon la revendication 1, **caractérisé en ce que** le dépassement d'un déphasage limite est évalué comme fonctionnement avec remorque, en particulier avec modification de l'état d'un compteur.

**6.** Procédé selon la revendication 4, **caractérisé en ce qu'**un dépassement d'une différence d'amplitude limite est évalué comme fonctionnement avec remorque, en particulier avec modification de l'état d'un compteur.

**7.** Procédé selon l'une des revendications 5 ou 6, **caractérisé en ce qu'**un fonctionnement avec remorque est détecté si le déphasage limite et/ou la différence d'amplitude limite sont dépassés pendant une durée prédéterminée ou si un nombre prédéterminé de dépassements a été détecté.

**8.** Procédé selon la revendication 1, **caractérisé en ce que** l'évaluation du déphasage s'effectue par une évaluation des évolutions dans le même sens et/ou dans des sens opposés du signal effectif et du signal de consigne.

**9.** Procédé selon la revendication 8, **caractérisé en ce qu'**une différence entre le signal effectif instantané et un signal effectif d'un cycle d'interrogation précédent, de préférence du dernier cycle d'interrogation, est formée et **en ce qu'**un produit de la différence de signal effectif et de la différence d'un signal de consigne est formé, la différence de signal de consigne étant la différence entre le signal de consigne instantané et un signal de consigne d'un cycle d'interrogation précédent, de préférence le dernier cycle d'interrogation, et **en ce qu'**il est conclu que le fonctionnement est avec remorque en fonction du signe du produit.

**10.** Procédé selon la revendication 9, **caractérisé en ce que** l'état d'un compteur est modifié en fonction du signe du produit, et en particulier **en ce que** l'état du compteur est incrémenté lorsque le signe est positif et l'état du compteur et décrémenté lorsque le signe est négatif.

**11.** Procédé selon la revendication 10, **caractérisé en ce que** l'état maximum et/ou l'état minimum du compteur sont limités.

**12.** Procédé selon l'une des revendications 10 ou 11, **caractérisé en ce que** l'état du compteur est modifié en fonction du résultat de l'évaluation de la différence d'amplitude entre le signal effectif et le signal de consigne, en particulier **en ce que** l'état du compteur est décrémenté lorsque la différence d'amplitude limite est dépassée.

**13.** Procédé selon la revendication 12, **caractérisé en** ce que l'état du compteur est multiplié par le quotient de la différence d'amplitude sans remorque et de la différence d'amplitude avec remorque ou avec un quotient réciproque.

**14.** Procédé selon l'une des revendications 10 à 13, **caractérisé en ce qu'**un fonctionnement avec remorque est détecté lorsqu'un état limite du compteur est atteint.

**15.** Procédé selon l'une des revendications précédentes, **caractérisé en ce qu'**une logique de roulis de remorque d'un système de régulation de la dynamique de roulage est débranchée ou désensibilisée de préférence temporairement lorsqu'un fonctionnement sans remorque est détecté.

**16.** Procédé selon l'une des revendications précédentes, **caractérisé en ce que** lorsque le fonctionnement avec remorque est détecté, le comportement d'un système de régulation de la dynamique de roulage est modifié, et en particulier des interventions de stabilisation du roulage, de préférence des interventions de stabilisation du roulage en vue de diminuer les instabilités qui surviennent en particulier en fonctionnement avec remorque sont activées.

**17.** Procédé selon l'une des revendications précédentes, **caractérisé en ce que** lorsque l'absence d'une remorque est détectée, le comportement d'un système de régulation de la dynamique de roulage est modifié, en particulier par désactivation ou atténuation d'interventions de stabilisation du roulage, de préférence d'interventions de stabilisation du roulage en vue de diminuer les instabilités qui surviennent en particulier en fonctionnement avec remorque.

**18.** Procédé selon l'une des revendications 16 ou 17, **caractérisé en ce qu'**une modification du comportement du système de régulation de la dynamique de roulage a également lieu au cas où le véhicule tracteur est excité à osciller malgré qu'une introduction par le conducteur indique que le véhicule doit être placé dans un autre état de roulage.

**19.** Procédé selon la revendication 1, **caractérisé en ce que** la libération en vue de l'évaluation du déphasage entre le signal effectif et le signal de consigne est associée à au moins une condition et de préférence **en ce que** la détection du déphasage reste activée pendant une durée paramétrisable après que la condition n'est plus respectée.

**20.** Procédé selon la revendication 1, **caractérisé en ce que** lors de la désactivation de l'évaluation du déphasage entre le signal effectif et le signal de consigne, les grandeurs utilisées et en particulier un état du compteur sont réinitialisés.

**21.** Appareil de commande qui exécute un procédé selon l'une des revendications précédentes.

**Fig. 1**

Fig. 2

```
┌─────────────────────────────────────────────────┐
│   Differenzbildung für die Inputsignale:          │──18
│ Aktueller Wert minus Wert aus letztem Zyklus      │
└─────────────────────────────────────────────────┘
                         │
                         ▼
┌─────────────────────────────────────────────────┐
│       Bildung des Produkts der Differenzen         │──19
└─────────────────────────────────────────────────┘
                         │
                         ▼          19a
                    ╱╲
                   ╱    ╲           N
              ◁  Produkt positiv  ▷─────────────┐
                   ╲    ╱                        │
                    ╲╱                           │
                     │ Y                         │
                     ▼                           ▼
        ┌──────────────────┐           ┌──────────────────┐
        │  Zähler erhöhen   │──20       │ Zähler vermindern │──21
        └──────────────────┘           └──────────────────┘
                     │                           │
                     │◄──────────────────────────┘
                     ▼
        ┌──────────────────┐
        │  Zähler begrenzen │──22
        └──────────────────┘
                     ⋮
                     ▼
  ┌──────────────────────────────┐
  │ Auswertung Amplitudendifferenz │──13
  └──────────────────────────────┘
                     ⋮
```

12

# Fig. 3

Soll/
Ist
Gierrate

Ist-Gierrate

Soll-Gierrate

Zeit

## Fig. 4

Soll/
Ist
Gierrate

Soll-Gierrate

Ist-Gierrate

Zeit

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19964048 A1
- DE 19744066 A1

- EP 0765787 A2